# DEMANDE DE BREVET EUROPEEN

(11) **EP 4 685 315 A1**
(43) Date de publication de la demande: **28.01.2026**
(21) Numéro de dépôt: 25191080.8
(22) Date de dépôt: 22.07.2025
(51) Int. Cl.: E04H 6/02, E03B 3/02, E04B 1/34, F24S 25/12, F24S 40/44, H02S 20/23

(54) **STRUCTURE PORTEUSE MUNIE D'UN ESPACE INTERIEUR DE STOCKAGE D'EAU**

(30) Priorité: 24.07.2024 FR 2408195
(71) Demandeur: NOVAREN, 83470 Saint-Maximin-la-Sainte-Baume (FR)
(72) Inventeur: DE RIJKE, Frederika, 83470 Saint-Maximin-la-Sainte-Baume (FR); LE BEL, Yves, 83470 Saint-Maximin-la-Sainte-Baume (FR); LOMBARD, Sylvain, 83470 Saint-Maximin-la-Sainte-Baume (FR); GUYARD, Christophe, 83470 Saint-Maximin-la-Sainte-Baume (FR); VALET DE REGANHAC, Cédric, 83470 Saint-Maximin-la-Sainte-Baume (FR)
(74) Mandataire: Novagraaf Technologies

(57) **Abrégé**

La présente invention a pour objet une structure porteuse (10), notamment pour supporter une toiture (14) ou des panneaux solaires, comportant au moins un poteau (16) muni à son extrémité inférieure d'un élément de fondation (20) qui est prévu pour ancrer le poteau (16) dans le sol (S), caractérisée en ce que chaque poteau (16) comporte :
- un espace intérieur de stockage (30) apte à stocker une quantité d'eau prédéterminée, ledit espace intérieur de stockage (30) s'étendant au moins en partie dans un tronçon inférieur du poteau (16) destiné à être positionné sous le niveau (N) du sol (S), dit tronçon d'assise (28),
- un orifice d'alimentation supérieur (34) prévu pour être raccordé à un collecteur d'eau de pluie (36) de manière à permettre un remplissage de l'espace intérieur de stockage (30) avec de l'eau de pluie.

## Description

### Domaine technique de l'invention

La présente invention concerne une structure porteuse telle qu'utilisée pour soutenir le toit d'un abri ou pour soutenir des panneaux solaires.

L'invention concerne plus particulièrement une structure porteuse comportant au moins un poteau de soutien.

### Arrière-plan technique

On connaît déjà des structures porteuses comportant des poteaux de soutien qui supportent un élément de toiture de manière à former un abri pour la pluie ou pour le soleil. De tels abris peuvent aussi comporter des panneaux solaires, ou panneaux à capteurs solaires photovoltaïques, de manière à fournir, en plus de l'abri, une source d'énergie électrique.

Ce type de structure porteuse forme avec l'élément de toiture une masse relativement importante, et/ou forme un porte à faux relativement important, ce qui nécessite un ancrage au sol au moyen de fondations. La réalisation de ces fondations peut consommer beaucoup de matériaux, par exemple du béton. De plus, si la structure porteuse et l'élément de toiture doivent pouvoir résister à des vents violents, il faut s'assurer que ces fondations sont dimensionnées de manière suffisante pour éviter toute détérioration ou mouvement de la structure porteuse.

Il existe donc un besoin pour améliorer les structures porteuses existantes et faciliter leur installation dans des environnements divers.

### Résumé de l'invention

L'invention propose une structure porteuse, notamment pour supporter une toiture ou des panneaux solaires, comportant au moins un poteau muni à son extrémité inférieure d'un élément de fondation qui est prévu pour ancrer le poteau dans le sol, caractérisée en ce que chaque poteau comporte :
- un espace intérieur de stockage apte à stocker une quantité d'eau prédéterminée, ledit espace intérieur de stockage s'étendant au moins en partie dans un tronçon inférieur du poteau destiné à être positionné sous le niveau du sol, dit tronçon d'assise,
- un orifice d'alimentation supérieur prévu pour être raccordé à un collecteur d'eau de pluie de manière à permettre un remplissage de l'espace intérieur de stockage avec de l'eau de pluie.

Selon d'autres caractéristiques de l'invention :
- chaque poteau comporte une cavité et l'espace intérieur de stockage est un élément rapporté qui est installé dans ladite cavité ;
- la structure porteuse comporte au moins deux poteaux dont les espaces intérieurs de stockage sont reliés par un conduit de raccordement ;
- au moins un poteau est pourvu d'au moins un robinet qui est raccordé à l'espace intérieur de stockage et qui permet de prélever de l'eau ;
- chaque élément de fondation comporte un élément d'ancrage fixé à une platine de support, la platine de support étant fixée à l'extrémité inférieure du poteau associé ;
- chaque poteau comporte un orifice d'évacuation agencé sous l'orifice d'alimentation supérieur de manière à permettre une évacuation de l'eau contenue dans l'espace intérieur de stockage lorsque le niveau d'eau dépasse une limite supérieure ;

L'invention propose aussi un ensemble de structure porteuse comportant au moins une structure porteuse selon la caractéristique précédente, caractérisé en ce qu'il comprend une citerne prévue pour stocker une quantité d'eau déterminée, la citerne étant reliée à l'espace intérieur de stockage d'au moins un poteau par une conduite d'évacuation qui est connectée à l'orifice d'évacuation.

Selon un mode de réalisation avantageux de l'ensemble de structure porteuse, la citerne est équipée d'une pompe qui permet de transférer de l'eau contenue dans la citerne vers l'espace intérieur de stockage au travers de la conduite d'évacuation.

Selon un autre mode de réalisation avantageux de l'ensemble de structure porteuse, l'espace intérieur de stockage est équipé d'un capteur de niveau bas prévu pour déclencher le fonctionnement de la pompe lorsque le niveau d'eau dans l'espace intérieur de stockage atteint le niveau bas, le niveau bas étant situé au-dessus du tronçon d'assise.

L'invention propose aussi un procédé d'installation d'une structure porteuse telle que décrite précédemment, comportant les étapes suivantes :
a) réalisation d'un trou dans le sol,
b) positionnement du poteau et de son élément de fondation dans le trou de manière que le tronçon d'assise du poteau soit sous le niveau du sol,
c) remplissage de l'espace intérieur de stockage avec de l'eau au moins jusqu'au niveau du sol.

Selon un mode de réalisation avantageux du procédé d'installation, il comporte une étape au cours de laquelle les espaces intérieurs de stockage d'au moins deux poteaux sont raccordés en installant un conduit de raccordement sous le niveau du sol.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue en coupe longitudinale selon le plan I-I qui représente un ensemble de structure porteuse réalisé conformément aux enseignements de l'invention avec une toiture ;
[Fig.2] est une vue en coupe transversale selon le plan II-II qui représente l'ensemble de structure porteuse de la figure 1 muni de deux poteaux.

### Description détaillée de l'invention

Dans la description qui va suivre, des éléments identiques, similaires ou analogues seront désignés par les mêmes chiffres de référence.

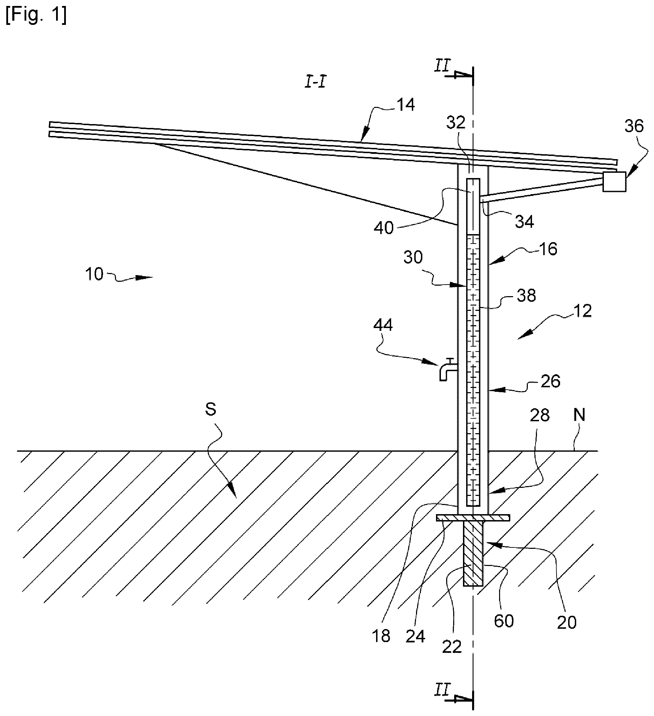

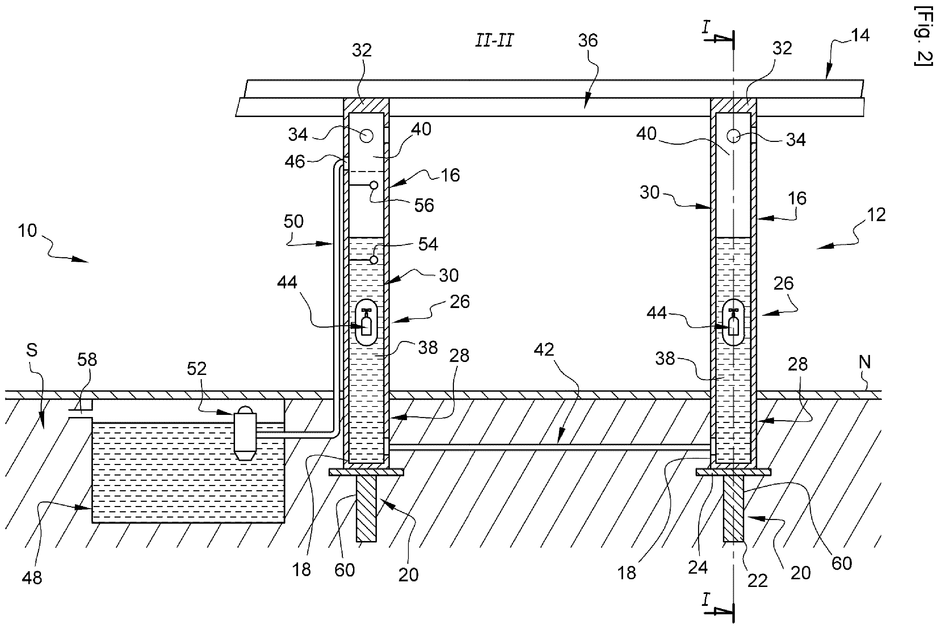

Les figures 1 et 2 illustrent un ensemble de structure porteuse 10 qui comporte une structure porteuse 12 supportant une toiture 14.

La structure porteuse 12 comporte ici deux poteaux 16 verticaux qui sont espacés l'un de l'autre de manière à permettre une répartition équilibrée du poids de la toiture 14 sur ces deux poteaux 16.

Bien entendu, selon des variantes de réalisation, la structure porteuse 12 pourrait comporter un nombre différent de poteaux 16 supérieur à deux.

Chaque poteau 16 est planté dans le sol S. Plus précisément, chaque poteau 16 est muni à son extrémité inférieure 18 d'un élément de fondation 20 qui est prévu pour permettre l'ancrage du poteau 16 dans le sol S.

Selon l'exemple de réalisation représenté, l'élément de fondation 20 comporte par exemple un élément d'ancrage 22 tel qu'un pieu qui est porté par une platine de support 24. La platine de support 24, qui s'étend selon un plan transversal, est fixée à l'extrémité inférieure 18 du poteau 16 de manière que le poteau 16 repose sur la platine de support 24, à une profondeur déterminée dans le sol S.

Chaque poteau 16 comporte donc un tronçon supérieur, dit tronçon principal 26, qui s'étend au-dessus du niveau N du sol S, et un tronçon inférieur, dit tronçon d'assise 28, qui s'étend sous le niveau N du sol S.

Avantageusement, chaque poteau 16 comporte un espace intérieur de stockage 30, qui s'étend au moins en partie dans le tronçon d'assise 28, de manière à pouvoir contenir de l'eau. Chaque poteau 16 est conçu de manière à pouvoir retenir une quantité d'eau minimale dans le tronçon d'assise 28 pour former un lest favorisant la stabilité du poteau 16.

Selon le mode de réalisation représenté, l'espace intérieur de stockage 30 s'étend sensiblement depuis la platine de support 24 jusqu'à une extrémité supérieure 32 du poteau 16.

L'espace intérieur de stockage 30 comporte un orifice d'alimentation supérieur 34 qui est raccordé à un collecteur d'eau de pluie 36 de manière à permettre un remplissage de l'espace intérieur de stockage 30 avec de l'eau de pluie.

Le collecteur d'eau de pluie 36 est par exemple une gouttière qui collecte l'eau de pluie lorsqu'elle ruisselle sur la toiture 14.

Selon le mode de réalisation représenté, l'espace intérieur de stockage 30 se présente sous la forme d'un élément rapporté, par exemple un réservoir 38 formé d'une enveloppe en matériau plastique tel que du polyéthylène haute densité (PE-HD), le réservoir 38 étant installé dans une cavité 40 formée à l'intérieur du poteau 16.

D'autres matériaux peuvent être utilisés pour réaliser le réservoir 38, par exemple du polypropylène, de la fibre de verre, des fibres recyclées, ou autres.

Chaque poteau 16 peut par exemple avoir la forme d'un tube de section ronde, ou carrée, ou d'une autre forme, qui délimite la cavité 40.

Selon le mode de réalisation illustré par la figure 2, les espaces intérieurs de stockage 30 des deux poteaux 16 qui forment la structure porteuse 12 sont reliés par un conduit de raccordement 42. Ce conduit de raccordement 42 est agencé sous le niveau N du sol S et se raccorde à chacun des espaces intérieurs de stockage 30 au travers des tronçons d'assise 28 associés, à proximité de chaque platine de support 24, donc à la base de chaque poteau 16.

Le conduit de raccordement 42 permet de faire communiquer les deux espaces intérieurs de stockage 30 pour équilibrer les niveaux d'eau dans les deux poteaux 16. Ainsi, si l'un des poteaux 16 reçoit plus d'eau que l'autre poteau 16, l'eau peut circuler vers le poteau 16 le moins rempli jusqu'à ce que les niveaux d'eau soient identiques dans les espaces intérieurs de stockage 30.

Avantageusement, chaque poteau 16 est ici pourvu d'un robinet 44 qui est raccordé à l'espace intérieur de stockage 30 et qui permet de prélever de l'eau dans l'espace intérieur de stockage 30, par exemple pour remplir un récipient destiné à arroser des plantes, ou pour tout autre usage adapté d'eau de pluie de collecte.

Le poteau 16 représenté à gauche sur la figure 2 comporte ici un orifice d'évacuation 46 qui est agencé sous l'orifice d'alimentation supérieur 34 de manière à permettre une évacuation de l'eau contenue dans l'espace intérieur de stockage 30 lorsque le niveau d'eau dépasse une limite supérieure située au niveau de l'orifice d'évacuation 46.

L'ensemble de structure porteuse 10 comporte une citerne 48 qui est prévue pour stocker une quantité d'eau déterminée. La citerne 48 est ici enterrée, sous le niveau N du sol S, à côté de la structure porteuse 12. Elle est reliée à l'espace intérieur de stockage 30 du poteau 16 situé à gauche sur la figure 2, par une conduite d'évacuation 50 qui est connectée à l'orifice d'évacuation 46.

Ainsi, lorsque le niveau d'eau dans les espaces de stockage 30 dépasse la limite supérieure, située ici au niveau de l'orifice d'évacuation 46, l'eau peut s'écouler vers la citerne 48.

Selon le mode de réalisation avantageux représenté sur les figures, la citerne 48 est équipée d'une pompe 52 qui permet de transférer de l'eau contenue dans la citerne 48 vers les espaces intérieurs de stockage 30 au travers de la conduite d'évacuation 50. Ceci permet de maintenir un niveau d'eau minimum dans les espaces de stockage 30 de manière à garantir la stabilité de la structure porteuse 12.

L'un des poteaux 16, ici celui de gauche sur la figure 2, est muni d'un capteur de niveau bas 54 et d'un capteur de niveau haut 56, tous les deux situés sous l'orifice d'évacuation 46. Ces capteurs 54, 56 sont reliés à la pompe 52 de manière à déclencher et arrêter le fonctionnement de la pompe 52 en fonction du niveau d'eau dans l'espace intérieur de stockage 30.

Ainsi, lorsque le niveau d'eau dans l'espace intérieur de stockage 30 descend sous le capteur de niveau bas 54, la pompe 52 se met en marche de manière à alimenter l'espace intérieur de stockage 30 avec de l'eau provenant de la citerne 48. Le niveau d'eau monte dans l'espace intérieur de stockage 30, en s'équilibrant ici avec le niveau d'eau dans l'autre poteau 16, jusqu'à atteindre le capteur de niveau haut 56.

Lorsque le niveau d'eau atteint le capteur de niveau haut 56, la pompe 52 s'arrête.

On note que l'ensemble de structure porteuse 10 pourrait n'être équipé que du capteur de niveau bas 54. Dans ce cas, la pompe 52 serait déclenchée pour une durée prédéterminée ou pour une quantité d'eau prédéterminée, de manière à transférer suffisamment d'eau dans les espaces intérieurs de stockage 30 pour assurer la stabilité de la structure porteuse 12 et éventuellement pour permettre de distribuer de l'eau par les robinets 44.

De préférence, la citerne 48 est équipée d'un orifice de sortie 58 qui permet d'évacuer le trop-plein de la citerne 48.

On décrit maintenant le procédé d'installation de la structure porteuse 12.

Au cours d'une première étape, un trou 60 est creusé dans le sol S pour chaque poteau 16. Ce trou 60 est dimensionné pour permettre d'y positionner l'élément de fondation 20 et le tronçon d'assise 28.

Au cours d'une seconde étape, le poteau 16 est positionné dans le trou 60 avec son élément de fondation 20, de manière que le tronçon d'assise 28 soit sous le niveau N du sol S.

Il est possible par exemple d'enfoncer d'abord l'élément d'ancrage 22 dans le sol S, puis de fixer sur l'élément d'ancrage 22 la platine de support 24, puis de fixer la base du poteau 16 sur la platine de support 24.

Il est possible aussi de placer l'élément de fondation 20 au fond du trou 60 puis de couler du béton dans le trou 60.

D'autres techniques pour la réalisation de fondations peuvent être utilisées.

Au cours d'une troisième étape, l'espace intérieur de stockage 30 de chaque poteau 16 est rempli avec de l'eau au moins jusqu'au niveau N du sol S, et de préférence jusqu'au-dessus du capteur de niveau bas 54.

Au cours d'une quatrième étape, les espaces intérieurs de stockage 30 des poteaux 16 sont raccordés en installant le conduit de raccordement 42 sous le niveau N du sol S et en le connectant à chaque poteau 16 au niveau du tronçon d'assise 28.

Un avantage de la structure porteuse 12 proposée ici est qu'elle permet de sous-dimensionner les éléments de fondation 20, ou de simplifier les solutions techniques pour réaliser les fondations destinées à fixer les poteaux 16, puisque l'eau contenue dans les espaces intérieurs de stockage 30, en particulier dans le tronçon d'assise 28, apporte un surplus de poids, par rapport au poids intrinsèque des poteaux 16, agissant comme un lest qui renforce la stabilité des poteaux 16. La structure porteuse 12 proposée ici permet par exemple de minimiser la profondeur d'ancrage pour l'installation des fondations.

Une fois l'ensemble de structure porteuse 10 installé, les eaux de pluie sont collectées par le collecteur d'eau de pluie 36 et transférées vers les espaces intérieurs de stockage 30 par l'orifice d'alimentation supérieur 34.

Le niveau d'eau dans les espaces intérieurs de stockage 30 peut descendre sous le capteur de niveau bas 54, par exemple en raison d'un prélèvement fréquent d'eau par les robinets 44, et/ou en raison de précipitations insuffisantes. Dans cette situation, la pompe 52 se déclenche et fait remonter les niveaux d'eau dans les espaces intérieurs de stockage 30.

L'eau contenue dans la citerne 48 peut être de l'eau de pluie stockée à la suite de précipitations importantes qui ont fait déborder les espaces intérieurs de stockage 30 via l'orifice d'évacuation 46 et la conduite d'évacuation 50. Si nécessaire, il est possible de remplir en partie la citerne 48 avec de l'eau provenant d'une source extérieure, afin de garantir une quantité minimale d'eau dans la citerne 48.

On note que la présence du conduit de raccordement 42 entre les poteaux 16 permet d'assurer un niveau d'eau homogène entre les poteaux 16.

On dispose ainsi d'une structure porteuse 12 lestée par les eaux pluviales avec une autorégulation inter poteaux garantissant une charge régulière et permanente sur les poteaux 16.

Les poteaux 16 peuvent être réalisés en acier galvanisé, en aluminium, ou en béton. Ils peuvent être ronds, de diamètre compris entre 15 et 50 cm, ou rectangulaires, de côtés compris entre 15 et 50 cm.

Les fondations peuvent être réalisées en pieux battus, pieux vissés, racinaire, ou béton. La platine de support 24 permet de reprendre les poteaux 16 et sert de support à l'espace intérieur de stockage 30.

Le réservoir 38, lorsqu'il est indépendant de la structure du poteau 16, peut être inséré dans la cavité 40 lors de la phase d'installation de la structure porteuse 12.

On note que la structure porteuse 12 décrite précédemment peut être utilisée pour supporter un ensemble de panneaux solaires ou différents types de toiture.

On note que l'ensemble de structure porteuse 10 selon l'invention est particulièrement adapté pour être installé dans un cimetière, un parc public, ou une zone de stationnement. Cet ensemble permet de fournir des points d'eau et un abri contre la chaleur du soleil ou contre la pluie. Cet ensemble de structure porteuse 10 peut aussi être installé sur le littoral où il peut aussi être utile de disposer d'un point d'eau, par exemple pour se rincer les pieds.

### LEGENDE

10 : ensemble de structure porteuse
12 : structure porteuse
14 : toiture
16 : poteau
18 : extrémité inférieure
20 : élément de fondation
22 : élément d'ancrage
24 : platine de support
26 : tronçon principal
28 : tronçon d'assise
30 : espace intérieur de stockage
32 : extrémité supérieure
34 : orifice d'alimentation supérieur
36 : collecteur d'eau de pluie
38 : réservoir
40 : cavité
42 : conduit de raccordement
44 : robinet
46 : orifice d'évacuation
48 : citerne
50 : conduite d'évacuation
52 : pompe
54 : capteur de niveau bas
56 : capteur de niveau haut
58 : orifice de sortie
60 : trou
N: niveau du sol
S : sol

## Revendications

1. Ensemble de structure porteuse (10) comportant au moins une structure porteuse (12), notamment pour supporter une toiture (14) ou des panneaux solaires, chaque structure porteuse de l'ensemble de structure porteuse comportant au moins un poteau (16) muni à son extrémité inférieure d'un élément de fondation (20) qui est prévu pour ancrer le poteau (16) dans le sol (S), **caractérisée en ce que** chaque poteau (16) comporte :
- un espace intérieur de stockage (30) apte à stocker une quantité d'eau prédéterminée, ledit espace intérieur de stockage (30) s'étendant au moins en partie dans un tronçon inférieur du poteau (16) destiné à être positionné sous le niveau (N) du sol (S), dit tronçon d'assise (28),
- un orifice d'alimentation supérieur (34) prévu pour être raccordé à un collecteur d'eau de pluie (36) de manière à permettre un remplissage de l'espace intérieur de stockage (30) avec de l'eau de pluie,
- un orifice d'évacuation (46) agencé sous l'orifice d'alimentation supérieur (34) de manière à permettre une évacuation de l'eau contenue dans l'espace intérieur de stockage (30) lorsque le niveau d'eau dépasse une limite supérieure,
l'ensemble de structure porteuse (10) comprenant une citerne (48) prévue pour stocker une quantité d'eau déterminée, la citerne (48) étant reliée à l'espace intérieur de stockage (30) d'au moins un poteau (16) par une conduite d'évacuation (50) qui est connectée à l'orifice d'évacuation (46).

2. Ensemble de structure porteuse (10) selon la revendication précédente, **caractérisée en ce que** chaque poteau (16) comporte une cavité (40) et **en ce que** l'espace intérieur de stockage (30) est un élément rapporté qui est installé dans ladite cavité (40).

3. Ensemble de structure porteuse (10) selon l'une quelconque des revendications précédentes, **caractérisée en ce qu'**elle comporte au moins deux poteaux (16) dont les espaces intérieurs de stockage (30) sont reliés par un conduit de raccordement (42).

4. Ensemble de structure porteuse (10) selon l'une quelconque des revendications précédentes, **caractérisée en ce qu'**au moins un poteau (16) est pourvu d'au moins un robinet (44) qui est raccordé à l'espace intérieur de stockage (30) et qui permet de prélever de l'eau.

5. Ensemble de structure porteuse (10) selon l'une quelconque des revendications précédentes, **caractérisée en ce que** chaque élément de fondation (20) comporte un élément d'ancrage (22) fixé à une platine de support (24), la platine de support (24) étant fixée à l'extrémité inférieure du poteau (16) associé.

6. Ensemble de structure porteuse (10) selon l'une des revendications précédentes, **caractérisé en ce que** la citerne (48) est équipée d'une pompe (52) qui permet de transférer de l'eau contenue dans la citerne (48) vers l'espace intérieur de stockage (30) au travers de la conduite d'évacuation (50).

7. Ensemble de structure porteuse (10) selon la revendication précédente, **caractérisé en ce que** l'espace intérieur de stockage (30) est équipé d'un capteur de niveau bas (54) prévu pour déclencher le fonctionnement de la pompe (52) lorsque le niveau d'eau dans l'espace intérieur de stockage (30) atteint le niveau bas, le niveau bas étant situé au-dessus du tronçon d'assise (28).
